# EUROPEAN PATENT SPECIFICATION

(11) **EP 1 138 579 B1**
(45) Date of publication and mention of the grant of the patent: **31.05.2006**
(21) Application number: 01108138.7
(22) Date of filing: 30.03.2001
(51) Int. Cl.: B62D 21/15, B62D 25/16, B60R 21/34

(54) **Vehicle fender structure**
Kotflügelstruktur eines Fahrzeuges
Structure del' aile d'une véhicule

(30) Priority: 31.03.2000 JP 2000096667; 31.03.2000 JP 2000098312; 07.04.2000 JP 2000106242; 12.10.2000 JP 2000311571
(43) Date of publication of application: 04.10.2001
(73) Proprietor: Toyota Jidosha Kabushiki Kaisha, Toyota-shi, Aichi 471-8571 (JP)
(72) Inventor: Hamada, Makoto, Toyota-shi, Aichi-ken 471-8571 (JP); Hosoya, Toshiaki, Toyota-shi, Aichi-ken 471-8571 (JP); Matuyama, Narihide, Toyota-shi, Aichi-ken 471-8571 (JP)
(74) Representative: TBK-Patent

(56) References cited:
- DE-C- 4 401 023
- US-A- 4 973 102
- US-A- 5 466 035
- PATENT ABSTRACTS OF JAPAN vol. 017, no. 111 (M-1376), 8 March 1993 (1993-03-08) -& JP 04 297384 A (NISSAN SHATAI CO LTD), 21 October 1992 (1992-10-21)
- PATENT ABSTRACTS OF JAPAN vol. 1995, no. 03, 28 April 1995 (1995-04-28) -& JP 06 336179 A (MITSUBISHI MOTORS CORP), 6 December 1994 (1994-12-06)
- PATENT ABSTRACTS OF JAPAN vol. 1999, no. 12, 29 October 1999 (1999-10-29) -& JP 11 180350 A (TOYOTA MOTOR CORP), 6 July 1999 (1999-07-06)
- PATENT ABSTRACTS OF JAPAN vol. 2000, no. 02, 29 February 2000 (2000-02-29) -& JP 11 321717 A (HONDA MOTOR CO LTD), 24 November 1999 (1999-11-24)
- PATENT ABSTRACTS OF JAPAN vol. 018, no. 589 (M-1701), 10 November 1994 (1994-11-10) -& JP 06 219332 A (TOYOTA MOTOR CORP), 9 August 1994 (1994-08-09)
- PATENT ABSTRACTS OF JAPAN vol. 1997, no. 04, 30 April 1997 (1997-04-30) -& JP 08 324461 A (NISSAN MOTOR CO LTD), 10 December 1996 (1996-12-10)
- PATENT ABSTRACTS OF JAPAN vol. 1999, no. 12, 29 October 1999 (1999-10-29) -& JP 11 198862 A (NISSAN MOTOR CO LTD), 27 July 1999 (1999-07-27)
- PATENT ABSTRACTS OF JAPAN vol. 1999, no. 04, 30 April 1999 (1999-04-30) -& JP 11 011349 A (NISSAN MOTOR CO LTD), 19 January 1999 (1999-01-19)

## Description

### BACKGROUND OF THE INVENTION

### 1. Field of the Invention

The invention relates to the structure of a fender portion of a vehicle and, in particular, to the structure of a fender portion of a vehicle in which a fender is attached to a structural member of a vehicle such as an automobile.

### 2. Description of the Related Art

An example of a structure for a vehicle fender in which the fender is attached to a structural member of a vehicle such as an automobile is given in Japanese Utility Model Laid-Open Publication No. 6-27449.

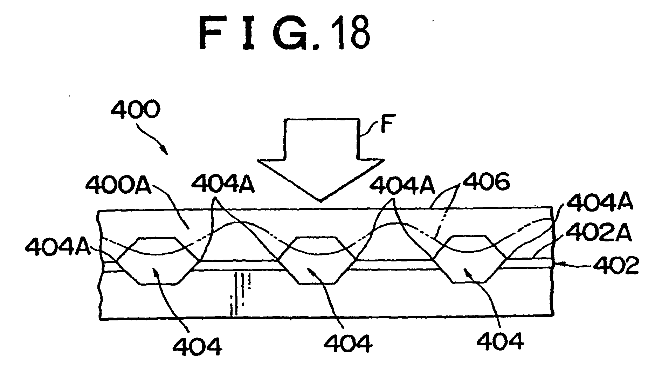

As is shown in Fig. 18, in this vehicle fender structure, a plurality of angular holes 404 are punched in a step portion 402 formed in a wall portion 400A on the inner side in the vehicle transverse direction of a front fender 400 and angular portions 404A of the angular holes 404 are matched at break line portions 402A of the step portion 402. Therefore, in this front fender 400, the break line portions 402A are easily deformed due to the forming of the angular portions 404A and, as is shown by the double dot chain line in Fig. 18, there is a large amount of deformation in a vertex 406 of the front fender 400 which corresponds to the angular holes 404. As a result, in this vehicle fender structure even if a colliding body impacts on the vertex 406 of the front fender 400, which corresponds to the angular holes 404, it is possible for the impact energy to be reliably absorbed.

However, this type of vehicle fender structure is structured so that, if a colliding body (impactor) impacts or strikes on the vertex 406 of the front fender 400 which corresponds to the angular holes 404, or if a colliding body impacts on the vertex 406 of the front fender 400 which does not correspond to the angular holes 404, the wall portion 400A on the inner side in the vehicle transverse direction of a front fender 400 is deformed by buckling in the vertical direction thereby absorbing the impact energy. As a result of this, there is a large amount of buckling deformation in the vertical direction in the wall portion on the inner side in the transverse direction of the vehicle generated by the impact load substantially from above (i.e. from the direction shown by the arrow F in Fig. 18). Because, however, there is a limit on the amount of buckling deformation in the vertical direction in the wall portion 400A on the inner side in the vehicle transverse direction of the front fender 400, it is easy for the impact load to exceed this amount of buckling deformation in the vertical direction in the inner wall portion 400A, and the load increase in the moments when the buckling deformation of the inner wall portion 400A is about to end. Accordingly, in this vehicle fender structure, when the impact load substantially from above is great, it is possible that the performance to mitigate the impact force is lowered.

Furthermore, a fender structure having the features of the preamble of claim 1 is shown in the abstract of JP 11 180350 A. Another fender structure having the features of the preamble of claim 4 is shown in the abstract of JP 11 321717 A. Yet another fender structure having the features of the preamble of claim 7 is shown in DE 44 01 023 C.

### SUMMARY OF THE INVENTION

It is an object of this invention to provide a fender structure for a.vehicle in which the performance to mitigate the impact force is improved.

According to a first aspect of the present invention, the above object is solved with a vehicle fender portion structure having the features of claim 1. According to a second aspect of the present invention, the above object is solved with a vehicle fender portion structure having the features of claim 4. According to a third aspect of the present invention, the above object is solved with a vehicle fender portion structure having the features of claim 7.

In accordance with a first aspect of the invention in a structure for a fender portion of a vehicle in which a fender is mounted on a structural member of a vehicle, the fender portion structure is provided with a first deforming portion in the fender that is deformed by an impact load from a substantially upward direction, a second deforming portion in the structural member that is deformed by an impact load from a substantially upward direction, and a deformation suppressing means that suppresses a deformation of the first deforming portion and the second deforming portion at a predetermined load or less.

Accordingly, because it is possible to absorb a portion of the impact energy caused by an impact load from a substantially upward direction through deformation of both the first deforming portion in the fender and the second deforming portion in the structural member, it is possible to reduce the amount of buckling deformation in the fender generated by the impact load. As a result, because it is possible to absorb the impact energy within the range in which buckling deformation is possible in the fender, a low deformation load is obtained until the end of the deformation and the performance to mitigate the impact force can be improved. Moreover, because it is possible to suppress both the deformation of the first deforming portion and the second deforming portion through the deformation suppressing portion at a predetermined load or less, it is possible to secure a predetermined rigidity.

In the above first aspect, it is possible for the first deforming portion to be a tongue shaped piece in the fender and the second deforming portion to be a tongue shaped piece in the structural member, and the deformation suppressing means to be a supporting piece provided below the tongue shape piece in the structural member.

If this structure is employed, the structure is simple and therefore easily manufactured.

Further, it is possible for the tongue shaped piece in the structural member to be provided with a weakened portion that acts as a trigger for deformation.

If this structure is employed, because it is possible for the deformation of the tongue shaped piece to be further accelerated by the weakened portion, the performance to mitigate the impact force can be further improved.

According to a second aspect of the invention, in a structure for a fender portion of a vehicle in which a fender is mounted on a structural member of a vehicle, the fender portion structure is provided with a weakened portion on an outside surface in the vehicle transverse direction of the fender that becomes the base point of deformation caused by an impact load from a substantially upward direction, and with a linking member that links the vicinity of the weakened portion with the structural member.

Accordingly, the fender is deformed by an impact load from a substantially upward direction with the weakened portion in the vehicle outer side surface as a base point. At this time, because the linking member linking the vicinity of the weakened portion with the structural member becomes a support pillar and the weakened portion of the fender definitely becomes the base point of the deformation, it is possible to reduce the amount of buckling deformation of the fender generated by the impact load. As a result, because it is possible to absorb the impact energy within the range in which buckling deformation is possible of the fender, it is possible to obtain a low deformation load until the end of the deformation and the performance to mitigate the impact force is improved.

In the above second aspect, it is possible for the weakened portion to be a concave groove extending in the longitudinal direction of the vehicle.

If this structure is employed, it is possible to improve the performance to mitigate the impact force across the entire longitudinal length of the vehicle through the concave groove provided extending in the vehicle longitudinal direction.

Further, it is possible for an ornamental molding to be attached to the concave groove.

If this structure is employed, the concave groove can double as a concave groove for attaching the ornamental molding and as the weakened portion which becomes the base point of the deformation of the fender.

According to a third aspect of the invention, in a structure for a fender portion of a vehicle in which a fender is mounted on a structural member of a vehicle, the structure is provided with: a general surface between the structural member and a parting portion between the hood that is formed as a sloping wall portion that slopes downward toward the inner side in the vehicle transverse direction; a fender panel whose attachment portion where the fender panel attaches to the structural member is substantially horizontal; and, between the sloping wall portion and the mounting portion, with a folding portion that is folded by a load from a substantially upward direction and a hole that is contracted when the folding portion is folded.

Accordingly, because the portion for mounting on the structural member is not provided on a sloping wall portion as in the conventional structure, the engine room is not made any smaller by protruding of the mounting portion of the fender panel toward the inner side in the vehicle transverse direction. Moreover, when a load is applied from a substantially upward direction, the folding portion between the sloping wall portion and the mounting portion is folded and the hole portion is contracted, resulting in the deformation load being reduced. Therefore, the ability to absorb impact is improved.

In the above third aspect, it is also possible for the folding portions to be provided at least to the front and rear in the longitudinal direction of the vehicle of the mounting portion, and for the hole portion to be provided at an outer side in the vehicle transverse direction of the mounting portion.

If this structure is employed, because the portion for mounting on the structural member is not provided on a sloping wall portion as in the conventional structure, the engine room is not made any smaller by protruding of the mounting portion of the fender panel toward the inner side in the vehicle transverse direction. Moreover, when an impact load is applied from a substantially upward direction, the folding portions provided at least to the front and rear sides of the mounting portion are folded and absorb the impact and the hole portion provided at the outer side in the vehicle transverse direction of the mounting portion is contracted, resulting in the deformation load being reduced. Therefore, the ability to absorb impact is improved.

In the above aspect, it is also possible for the length of a straight line between a bottom end and a top end of the folding portion before it is folded to be substantially equal to that of a straight line between a bottom end and a top end of the folding portion after it is folded.

If this structure is employed, when the folding portion is folded, the deformation load can be reliably reduced without any new bent portion being created.

In the above aspect, it is also possible for a recessed portion to be provided in an area opposing the folding portion of the structural member.

If this structure is employed, because a portion of the folding portion enters, when it is folded, the recessed portion, a portion of the folding portion abuts against the structural member and any further bending is prevented, therefore, the deformation load is further reduced.

In the above third aspect, it is also possible for the folding portion to be provided at an outer side in the vehicle transverse direction of the mounting portion, and the for hole portions to be provided to the front and rear in the longitudinal direction of the vehicle of the mounting portion.

If this structure is employed, because the portion for mounting on the structural member is not provided on a sloping wall portion as in the conventional structure, the engine room is not made any smaller by protruding of the mounting portion of the fender panel toward the inner side in the vehicle transverse direction. Moreover, when an impact load is applied from a substantially upward direction, the folding portion provided at least to the outer side in the vehicle transverse direction of the mounting portion is folded and absorbs the impact and the hole portion provided to the front and rear sides of the mounting portion is contracted, resulting in the deformation load being reduced. Therefore, the ability to absorb impact is improved.

Furthermore, it is possible for the folding portion to be formed separately from the fender panel.

By employing the above structure, the shape of the folding portion can be set without having to consider the formability of the fender panel.

### BRIEF DESCRIPTION OF THE DRAWINGS

Fig. 1 is a cross sectional view along the line I - I in Fig. 3;
Fig. 2 is an enlarged perspective view of a portion of the vehicle fender structure according to an unclaimed explanatory example of the invention;
Fig. 3 is a perspective view showing a vehicle to which the vehicle fender structure according to the embodiments of the invention has been applied;
Fig. 4 is a cross sectional view corresponding to Fig. 1 showing the vehicle fender structure according to the first embodiment of the invention;
Fig. 5 is an enlarged perspective view of a portion of the vehicle fender structure according to the first embodiment of the invention;
Fig. 6 is an enlarged perspective view of a portion of the vehicle fender structure according to a modified example of the first embodiment of the invention;
Fig. 7 is a cross sectional view corresponding to Fig. 1 showing the vehicle fender structure according to the second embodiment of the invention;
Fig. 8 is an enlarged perspective view of a portion of the vehicle fender structure according to the second embodiment of the invention;
Fig. 9 is a perspective view seen from a point diagonally to the front of and from the inner side of a vehicle showing the vehicle fender structure according the third embodiment of the invention;
Fig. 10 is a cross sectional view along the line XXXIX - XXXIX in Fig. 13.
Fig. 11 is an enlarged cross sectional view along the line XL - XL in Fig. 10;
Fig. 12 is an operation explanatory diagram of the vehicle fender structure according the third embodiment of the invention;
Fig. 13 is a perspective view showing a vehicle to which the vehicle fender structure according to the third embodiment of the invention has been applied;
Fig. 14 is a perspective view seen from a point diagonally to the front of and from the inner side of a vehicle showing the vehicle fender structure according the fourth embodiment of the invention;
Fig. 15 is a perspective view seen from a point diagonally to the front of and from the inner side of a vehicle showing the vehicle fender structure according the fifth embodiment of the invention;
Fig. 16 is a perspective view seen from a point diagonally to the front of and from the inner side of a vehicle showing the vehicle fender structure according the fifth embodiment of the invention;
Fig. 17 is an enlarged cross sectional view along the line XLVI - XLVI in Fig. 16; and
Fig. 18 is a side view showing a vehicle fender structure.

### DETAILED DESCRIPTION OF PREFERRED EMBODIMENTS

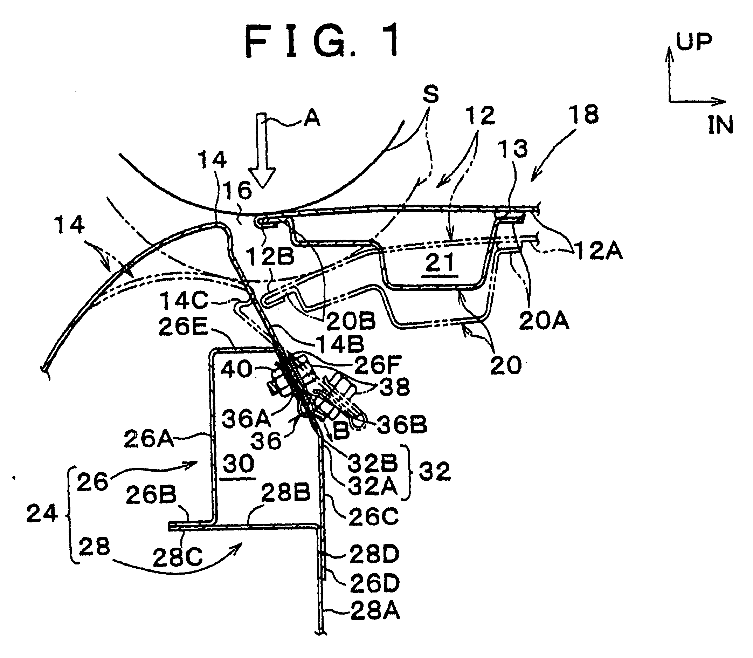

An explanatory example of the vehicle fender structure of the invention will now be described in accordance with Figs. 1 to 3. Note that, in the diagrams, the arrow FR shows the direction of the front of the vehicle, the arrow UP shows the direction of the top of the vehicle, and the arrow IN shows the direction of the inside of the vehicle.

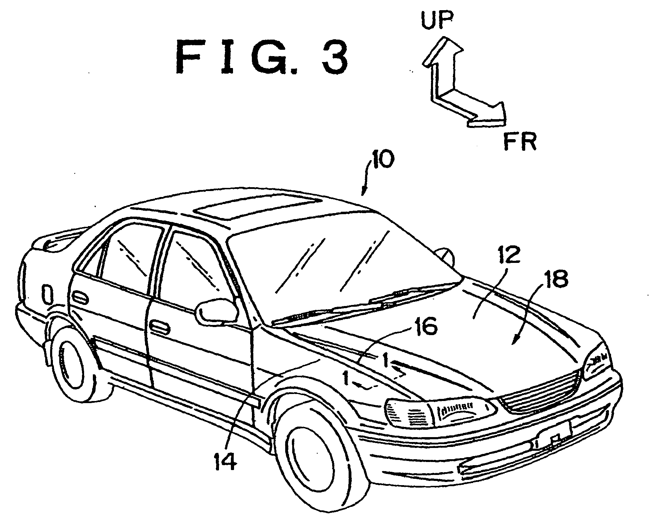

As is shown in Fig. 3, in this example, a boundary 16 between a hood panel 12 and a fender 14 of a vehicle body 10 extends in the longitudinal direction of the vehicle at both end portions in the transverse direction of the vehicle of a front hood 18.

As is shown in Fig. 1, a hood inner panel 20 is provided extending in the vehicle longitudinal direction at the bottom surface side of the outer side portions in the vehicle transverse direction of the hood panel (also known as the hood outer panel) 12. The cross sectional configuration of the hood inner panel 20 as seen from the vehicle longitudinal direction is formed generally in a hat shape with the open portion thereof facing upward. An inner flange 20A formed protruding outward at the inner side in the vehicle transverse direction of the open portion is joined to a bottom surface 12A of the hood panel 12 by an adhesive 13. An outer peripheral edge 12B of the hood panel 12 in the vehicle transverse direction is fixed by a hemming process to an outer flange 20B formed protruding outward at the outer side in the vehicle transverse direction of the open portion of the hood inner panel 20. A closed cross section portion 21 formed from the hood panel 12 and the hood inner panel 20 forms the framework of the hood panel 12 and is also provided with load monodeformation characteristics capable of absorbing sufficient impact even if a colliding body S collides with only the hood panel 12.

An apron upper member 24 which serves as a structural member of the vehicle body 10 in the vehicle longitudinal direction is provided below the boundary 16 between the hood panel 12 and the fender 14. The apron upper member 24 is formed from an apron upper member upper 26, which forms the top portion of the apron upper member 24, and an apron upper member lower 28, which forms the bottom portion of the apron upper member 24.

The apron upper member upper 26 is formed with a trapezoid shaped cross section whose open portion faces downward and a flange 26B, which is directed toward the outer side in the vehicle transverse direction, is formed at the bottom end portion of the outer wall portion 26A in the vehicle transverse direction. The apron upper member lower 28 is formed with an L shaped cross section and a horizontal wall portion 28B, which is directed toward the outer side in the vehicle transverse direction, is formed at the top end portion of a vertical wall portion 28A. The flange 26B of the apron upper member upper 26 and a distal end portion 28C of the horizontal wall portion 28B of the apron upper member lower 28 are welded together. A bottom end edge portion 26D of an inner wall portion 26C in the vehicle transverse direction of the apron upper member upper 26 is welded to an inner surface 28D in the vehicle transverse direction of the top end edge portion of the vertical wall portion 28A of the apron upper member lower 28.

Accordingly, the apron upper member 24 forms a closed cross sectional portion 30 that extends in the vehicle longitudinal direction through the apron upper member upper 26 and the apron upper member lower 28.

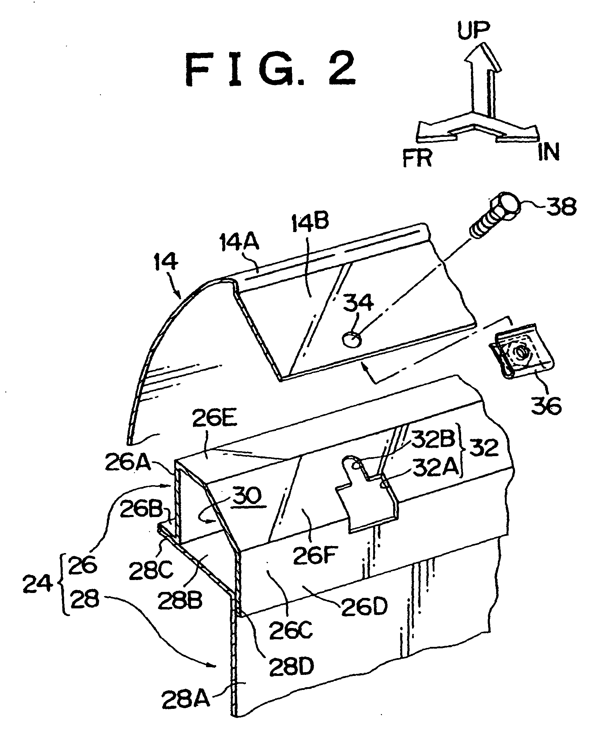

As is shown in Fig. 2, the top end portion of the inner wall portion 26C in the vehicle transverse direction and the inner end portion in the vehicle transverse direction of a top wall portion 26E of the apron upper member upper 26 are joined by a sloping wall portion 26F. Holes 32 are formed at predetermined intervals in the vehicle longitudinal direction in the sloping wall portion 26F. A bottom portion 32A of these holes 32 is formed in a rectangular shape with the bottom portion of the bottom portion 32A punched out of the top end portion of the inner side wall portion 26C in the vehicle transverse direction. The top portion 32B of the holes 32 is formed in a slit shape extending vertically from the center portion in the longitudinal direction of the bottom portion 32A.

As is shown in Fig. 1, the inner edge portion 14A in the vehicle transverse direction of the fender 14 facing the outer edge portion 12B in the vehicle transverse direction of the hood panel 12 is curved in an arc shape, and a sloping wall portion 14B is provided extending from an inner edge portion 14A in the vehicle transverse direction toward the sloping wall portion 26F of the apron upper member upper 26.

As is shown in Fig. 2, mounting holes 34 are punched at predetermined intervals in the vehicle longitudinal direction in the vicinity of the lower end portion of the sloping wall portion 14B in the fender 14. Nut plates 36 serving as mounting members are fixed by bolts 38 serving as mounting members to the mounting holes 34.

As is shown in Fig. 1, nuts 40 are fixed to a bottom piece 36A of the nut plate 36. By fastening the bolts 38 from a top piece 36B of the nut plate 36 to the nuts 40, the sloping wall portion 14B of the fender 14 and the sloping wall portion 26F of the apron upper member upper 26 are sandwiched between the top piece 36B and the bottom piece 36A of the nut plate 36. This results in the sloping wall portion 14B of the fender 14 being fixed to the sloping wall portion 26F of the apron upper member upper 26.

The operation of this explanatory example will now be described.

As is shown by the solid line in Fig. 1, in a normal state, by sandwiching the sloping wall portion 14B of the fender 14 and the sloping wall portion 26F of the apron upper member upper 26 between the top piece 36B and the bottom piece 36A of the nut plate 36, the sloping wall portion 14B of the fender 14 is fixed to the sloping wall portion 26F of the apron upper member upper 26, therefore, the fender can be reliably supported.

If, however, a colliding body S collides with the boundary 16 between the hood panel 12 and the fender 14 and the load acts substantially from an upward direction in substantially a downward direction (i.e. in the direction shown by the arrow A in Fig. 1), the area in the vicinity of the boundary 16 of the hood panel 12 and the area in the vicinity of the boundary 16 of the fender 14 is deformed downward, as is shown by the double dot chain line in Fig. 1.

At this time, in the vehicle fender structure of this example both the fender 14 and the mounting member comprising the bolt 38 and nut plate 36 are moved by the impact load from a substantially upward direction substantially downward, as is shown by the double dot chain line in Fig. 1, relative to the apron upper member 24 serving as a structural member. Therefore, because it is possible by this movement to absorb a portion of the impact energy, it is possible to reduce the amount of deformation of a buckling deformation area 14C of the fender 14 generated by the impact load. As a result, because it is possible to absorb the impact energy within the range in which buckling deformation is possible of the fender 14, it is possible to obtain a low deformation load until the end of the deformation and the performance to mitigate the impact force is improved.

Furthermore, in this example, when an impact load acts substantially from an upward direction, the nut plate 36 and bolt 38 serving as mounting members are able to move easily in the shearing direction of the fastened portion (i.e. the direction indicated by the arrow B in Fig. 1) through the hole 32 formed in the apron upper member 24 serving as a structural member.

Note that, because the force by which the bolt 38 is fastened is controlled such that the nut plate 36 and bolt 38 are able to be easily moved in the direction in which the fastened portion is sloping by an impact load substantially from above, the bolt 38 is fastened with a predetermined torque and, if necessary, a shoulder bolt is used.

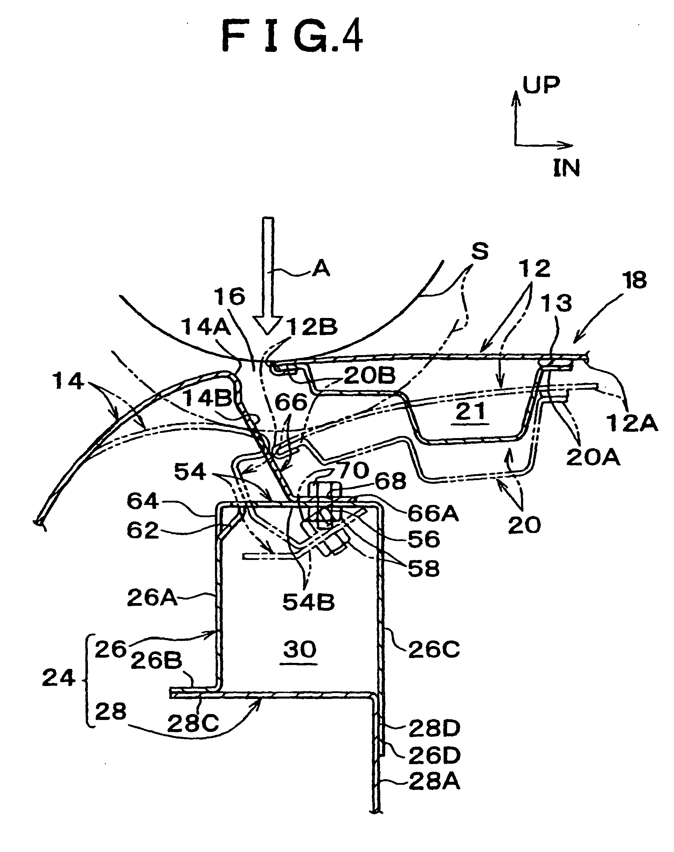

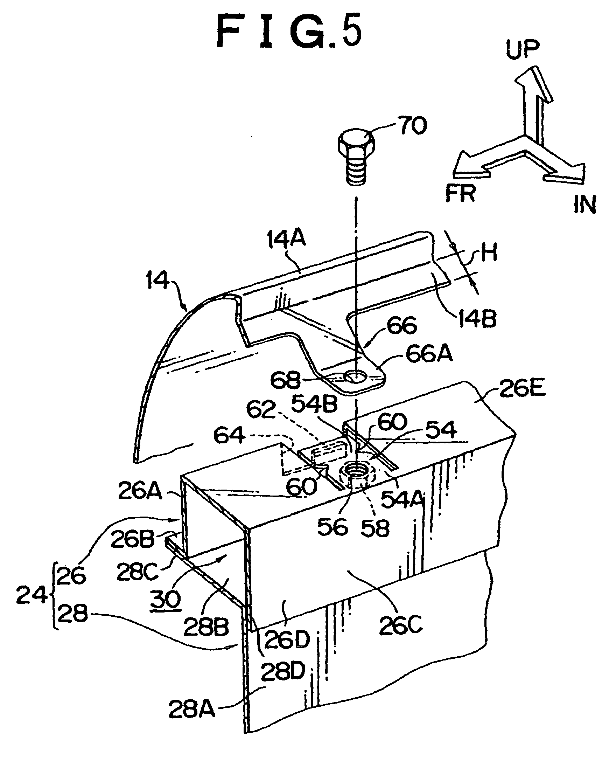

Next, a first embodiment of the vehicle fender structure of the invention will be described in accordance with Figs. 4 and 5.

Note that those members that are the same as in the explanatory example are given the same reference symbols and a description thereof is omitted.

As is shown in Fig. 5, in this embodiment, the apron upper member upper 26 is formed with a U shaped cross section whose open portion faces downward, and tongue shaped pieces 54 serving as second deforming portions are formed at predetermined intervals in the vehicle longitudinal direction in the top wall portion 26E of the apron upper member upper 26. Mounting holes 56 are formed in the vicinity of a base portion 54A of the tongue piece 54, which is the inner side in the vehicle transverse direction. Nuts 58 serving as mounting members are fixed coaxially with the mounting holes 56 to the bottom surface of the tongue shaped pieces 54.

Notches 60 cut in a V shape from both the front and rear directions of the vehicle are formed in the center portion in the vehicle transverse direction of the tongue shaped pieces 54, thereby forming weakened portions 54B. In addition, the end portions on the outer side in the vehicle transverse direction of the tongue shaped pieces 54 are supported from below by supporting pieces 62 serving as deformation control portions. The supporting pieces 62 are formed by being cut and then folded inside notches 64 formed in the outer wall portion 26A in the vehicle transverse direction of the apron upper member upper 26

Tongue shaped pieces 66 serving as first deforming members are also formed protruding at predetermined intervals in the vehicle longitudinal direction in the sloping wall portion 14B of the fender 14. A mounting hole 68 is formed in a bottom end portion 66A of the tongue shaped pieces 66.

As is shown in Fig. 4, by inserting a bolt 70 serving as a mounting member into the mounting hole 68 of each tongue shaped piece 66 in the fender 14 and by meshing this bolt 70 with the nut 58, the bottom end portion 66A of each tongue shaped piece 66 in the fender 14 is fixed to the tongue shaped piece 54 of each apron upper member upper 26 by the bolt 70 and nut 58.

Note that, as is shown in Fig. 5, in this embodiment, the vertical width H of the sloping wall portion 14B of the fender 14 is narrowed in areas other than the tongue shaped pieces 66 so that there is hardly any interference thereby with the apron upper member 24.

The operation of this embodiment will now be described.

As is shown in Fig. 4, in a normal state, the bottom end portion 66A of the tongue shaped piece 66 of the fender 14 is fixed to the tongue shaped piece 54 of the apron upper member upper 26 by the nut 58 and bolt 70 and the outer end portion in the vehicle transverse direction of the tongue shaped piece 54 is supported from below by the supporting piece 62 serving as a deformation control member. As a result, the fender 14 can be reliably supported.

If, however, a load above a predetermined value acts substantially from an upward direction in substantially a downward direction (i.e. in the direction shown by the arrow A in Fig. 4) on the boundary 16 between the hood panel 12 and the fender 14, the area in the vicinity of the boundary 16 of the hood panel 12 and the area in the vicinity of the boundary 16 of the fender 14 is deformed downward, as is shown by the double dot chain line in Fig. 4.

At this time, in the vehicle fender structure of this embodiment, the tongue shaped piece 54 serving as the second deforming portion of the apron upper member 24 buckles in a V shape with the weakened portion 54 B in which the V shaped notch 60 is formed as a base point and is deformed downward away from the supporting piece 62. The tongue shaped piece 66 serving as the first deforming portion of the fender 14 is also buckled. Therefore, because it is possible by the deformation of both the tongue shaped piece 54 and the tongue shaped piece 66 to absorb the impact energy, it is possible to reduce the amount of buckling deformation of the fender 14 generated by the impact load. As a result, because it is possible to absorb the impact energy within the range in which buckling deformation is possible of the fender 14, it is possible to obtain a low deformation load until the end of the deformation and the performance to mitigate the impact force is improved.

Moreover, in this embodiment, because the weakened portion 54B which acts as a trigger allowing the tongue shaped piece 54 to be deformed is provided, the deformation of the tongue shaped piece 54 can be further accelerated and the performance to mitigate the impact force is further improved.

Moreover, in this embodiment, because both the tongue shaped piece 54 and the tongue shaped piece 66 are deformed inside the closed cross section portion 30, it is possible to prevent the deformed tongue shaped piece 54 and the deformed tongue shaped piece 66 from interfering with adjacent members and the overall structure can be made more compact.

Further, in this embodiment, because the first deforming portion is formed from the tongue shaped piece 66 and the second deforming portion is formed from the tongue shaped piece 54, and because the deformation control portion is formed from the supporting piece 62 provided beneath the tongue shaped piece 54, the structure is simple and easily manufactured.

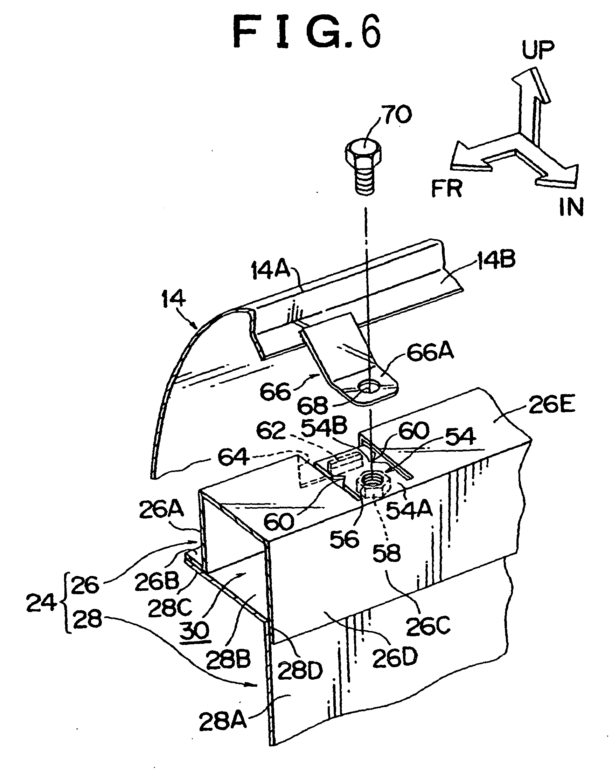

Note that, in this embodiment, the tongue shaped piece 66 serving as the first deforming member is formed integrally with the fender 14, however, instead of this, as is shown in Fig. 6, it is also possible to fix a tongue shaped piece 66 that has been formed as a separate member to the fender 14. In addition, in this embodiment, the weakened portion 54B is formed using a V shaped notch 60, however, instead of the V shaped notch, it is also possible to form the weakened portion 54B by another weakened portion forming means, such as by using a thinned portion or the like.

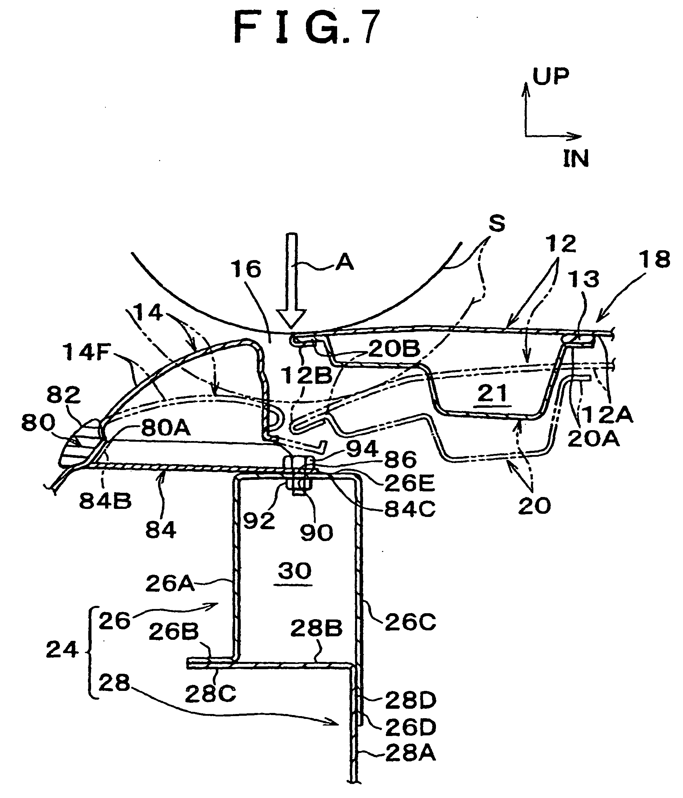

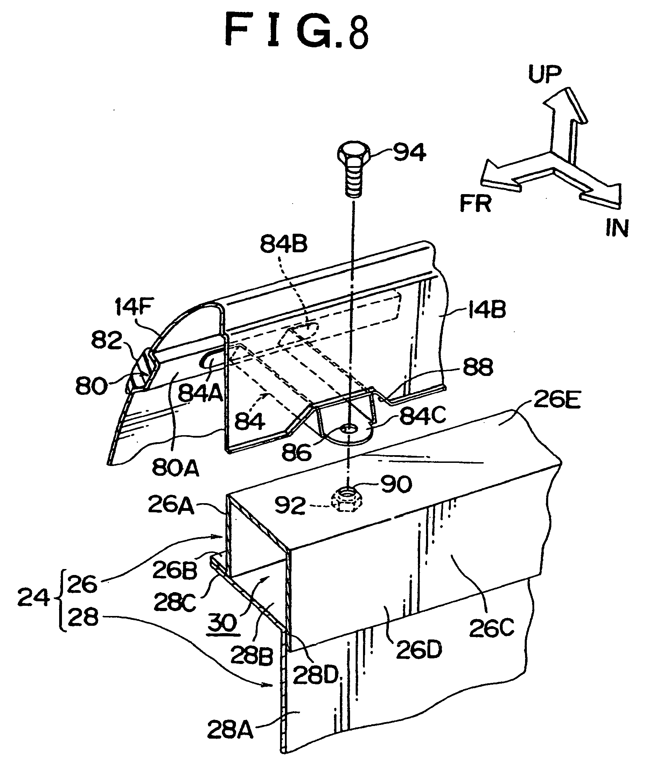

Next, a second embodiment of the vehicle fender structure of the invention will be described in accordance with Figs. 7 and 8.

Note that those members that are the same as in the explanatory example are given the same reference symbols and a description thereof is omitted.

As is shown in Fig. 8, in this embodiment, a concave groove 80, serving as a weakened portion that becomes the base point of deformation due to an impact load from substantially an upward direction on the vehicle outer surface 14F of the fender 14, is provided extending in the vehicle longitudinal direction. An ornamental molding 82 is attached to the concave groove 80.
Flanges 84A and 84b of a bracket 84 serving as a connecting member are fixed to a bottom portion 80A of the concave groove 80. The bracket 84 is provided extending toward the inner side in the vehicle transverse direction and mounting holes 86 are punched in the inner end portion 84C in the vehicle transverse direction of the bracket 84.

Note that a notch 88 is formed in the sloping wall portion 14B of the fender 14 so that it does not interfere with the bracket 84.

Mounting holes 90 are formed at predetermined intervals in the vehicle longitudinal direction in the top wall portion 26E of the apron upper member upper 26, and nuts 92 serving as mounting members are fixed coaxially with the mounting holes 90 to the bottom surface of the top wall portion 26E.

As is shown in Fig. 7, by inserting a bolt 94 serving as a mounting member in the mounting hole 86 of the bracket 84 and meshing this bolt 94 with the nut 92, the bottom portion 80A of the concave groove 80 of the fender 14 is fixed via the bracket 84 to the top wall portion 26E of the apron upper member upper 26.

Next, the operation of this embodiment will be described.

As is shown in Fig. 7, in a normal state, the bottom portion 80A of the concave groove 80 of the fender 14 is fixed via the bracket 84 to the top wall portion 26E of the apron upper member upper 26. Therefore, the fender 14 can be reliably supported.

If, however, a load of a predetermined value or more acts substantially from an upward direction in substantially a downward direction (i.e. in the direction shown by the arrow A in Fig. 7) on the boundary 16 between the hood panel 12 and the fender 14, the area in the vicinity of the boundary 16 of the hood panel 12 and the area in the vicinity of the boundary 16 of the fender 14 are deformed downward, as is shown by the double dot chain line in Fig. 7.

At this time, in the vehicle fender structure of this embodiment, the fender 14 is deformed with the concave groove 80 serving as the weakened portion in the vehicle outer surface 14F as a base point, and the bottom end portion of the sloping wall 14B of the fender 14 slides over the top of the top wall portion 26E of the apron upper member upper 26 toward the inner side in the vehicle transverse direction. At this time, because the bracket 84 serving as a connecting member becomes a support pillar and the concave groove 80 of the fender 14 definitely becomes the base point of the deformation, it is possible to reduce the amount of buckling deformation of the fender 14 generated by the impact load. As a result, because it is possible to absorb the impact energy within the range in which buckling deformation is possible of the fender 14, it is possible to obtain a low deformation load until the end of the deformation and the performance to mitigate the impact force is improved.

Moreover, in this embodiment, because the concave groove 80 which becomes the base point of the deformation of the fender 14 extends in the vehicle longitudinal direction, it is possible to improve the performance to mitigate the impact force across the entire longitudinal length of the vehicle.

Moreover, in this embodiment, because the ornamental molding 82 is attached to the concave groove 80, the concave groove 80 can double as a concave groove 80 for attaching the ornamental molding 82 and as the weakened portion which becomes the base point of the deformation of the fender 14.

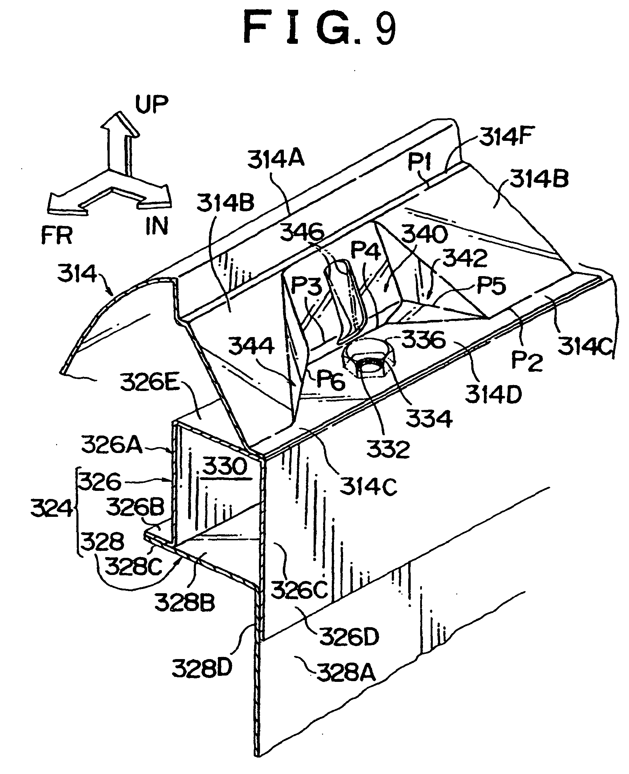

A third embodiment of the vehicle fender structure of the invention will now be described in accordance with Figs. 9 to 13.

Note that, in the diagrams, the arrow FR shows the direction of the front of the vehicle, the arrow UP shows the direction of the top of the vehicle, and the arrow IN shows the direction of the inside of the vehicle.

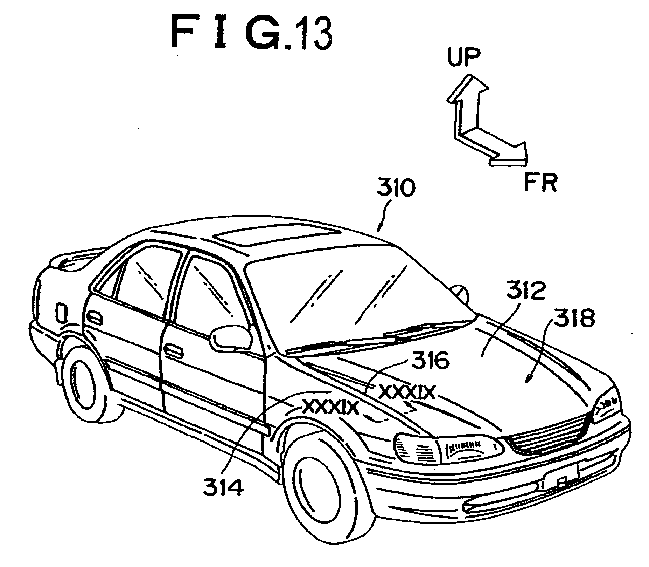

As is shown in Fig. 13, in this embodiment, a boundary 316 between a hood 312 of a vehicle body 310 and a fender panel 314 that is formed from metal or resin extends in the longitudinal direction of the vehicle at both end portions in the transverse direction of the vehicle of a front hood 318.

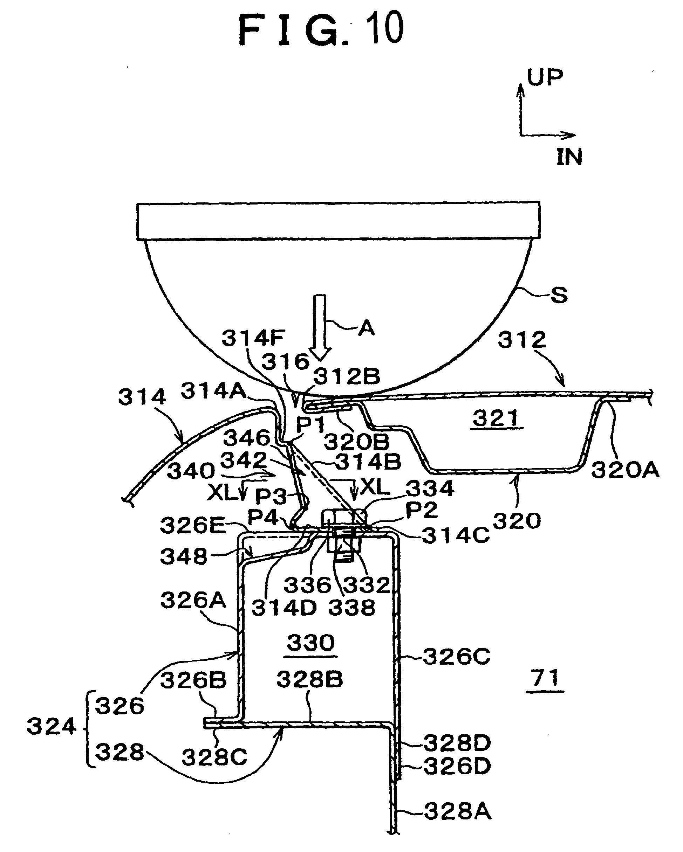

As is shown in Fig. 10, a hood inner panel 320 is provided extending in the vehicle longitudinal direction at the bottom surface.of the outer portions in the vehicle transverse direction of the hood panel (also known as the hood outer panel) 312. The cross sectional configuration of the hood inner panel 320 as seen from the vehicle longitudinal direction is formed generally in a hat shape with the open portion thereof facing upward. An inner flange 320A formed protruding outward at the inner side in the vehicle transverse direction of the open portion is joined with adhesive to a bottom surface 312A of the hood panel 312. An outer peripheral edge 312B in the vehicle transverse direction of the hood panel 312 is fixed by a hemming process to an outer flange 320B formed protruding outward at the outer side in the vehicle transverse direction of the open portion of the hood inner panel 320. A closed cross section portion 321 formed from the hood panel 312 and the hood inner panel 320 forms the framework of the hood panel 312, and is also provided with load monodeformation characteristics capable of absorbing sufficient impact even if a colliding body S collides with only the hood panel 312.

An apron upper member 324 which serves as a structural member of the vehicle body 310 is provided in the vehicle longitudinal direction below the boundary 316 of the hood panel 312 and the fender panel 314. The apron upper member 324 is formed from an apron upper member upper 326, which forms the top portion of the apron upper member 324, and an apron upper member lower 328, which forms the bottom portion of the apron upper member 324.

The apron upper member upper 326 is formed with a U shaped cross section whose open portion faces downward and a flange 326B, which is directed toward the outer side in the vehicle transverse direction, is formed at the bottom end portion of the outer wall portion 326A in the vehicle transverse direction. The apron upper member lower 328 is formed with an L shaped cross section and a horizontal wall portion 328B, which is directed to the outer side in the vehicle transverse direction, is formed at the top end portion of the vertical wall portion 238A. The flange 326B of the apron upper member upper 326 and a distal end portion 328C of the horizontal wall portion 328B of the apron upper member lower 328 are welded together. The bottom end edge portion 326D of the inner wall portion 326C in the vehicle transverse direction of the apron upper member upper 326 is welded to the inner surface 328D in the vehicle transverse direction of the top end edge portion of the vertical wall portion 328A of the apron upper member lower 328.

Accordingly, the apron upper member 324 forms a closed cross sectional portion 330 that extends in the vehicle longitudinal direction through the apron upper member upper 326 and the apron upper member lower 328.

As is shown in Fig. 9, mounting holes 332 are formed spaced at predetermined intervals in the vehicle longitudinal direction in a top wall portion 326E of the apron upper member upper 326.

As is shown in Fig. 10, an inner edge portion 314A in the vehicle transverse direction of the fender panel 314 that faces an outer edge portion 312B in the vehicle transverse direction of the hood panel 312 is formed as a parting portion of the fender panel 314. The inner edge portion 314A in the vehicle transverse direction curves downward and a narrow step portion 314F is formed facing the vehicle inner side at the bottom of this curved portion. A sloping wall portion 314B is provided extending in the vehicle transverse direction from the inner end P1 in the vehicle transverse direction of the step portion 314F toward the vicinity of the top wall portion 326E of the apron upper member upper 326 that is on the inner side in the vehicle transverse direction. A substantially horizontal flange portion 314C is formed extending inward in the vehicle transverse direction from the bottom end portion P2 of the sloping wall portion 314B. The flange portion 314C abuts against the top wall portion 326E of the apron upper member upper 326.

As is shown in Fig. 9, mounting portions 314D of the fender panel 314 where the fender panel 314 is mounted to the apron upper member upper 326 are formed at predetermined intervals in the vehicle longitudinal direction and each mounting portion 314D is formed substantially horizontally. Mounting holes 334 are punched in the center portion of each mounting portion 314D and bolts 336 are inserted from the top into the mounting holes 334 and the mounting holes 332 in the apron upper member upper 326.

As is shown in Fig. 10, the fender panel 314 is fixed to the apron upper member upper 326 by these bolts 336 and weld nuts 338 that are fixed to the bottom surface of the top wall portion 326E of the apron upper member upper 326.

As is shown in Fig. 9, folding portions 340, 342, and 344, which are folded by a load substantially from above, are formed between the mounting portions 314D and the sloping wall portions 314B of the fender panel 314.

As is shown in Fig. 10, the folding portion 340 is provided at the outer side in the vehicle transverse direction of the mounting portion 314D and a bent portion P3 is formed protruding inward in the vehicle transverse direction in the center portion in the vertical direction of the folding portion 340. The cross section of the folding portion 340 is shaped in a V shape bending inward in the vehicle transverse direction when looked at from the vehicle longitudinal direction. The boundary between the mounting portion 314D and the bottom end portion of the folding portion 340 forms a bent portion P4. If the lengths between the various portions are set as: S1 between P1 and P2; S2 between P1 and P3; S3 between P3 and P4; and S4 between P4 and P2, then these lengths have the relationship: S1 ≒ S2 - S3 + S4. In the folding portion 340, the distance in a direct line between the top end P1 and the bottom end P2 after folding is set so as to be substantially the same as the distance in a straight line between the top end P1 and the bottom end P2 before folding.

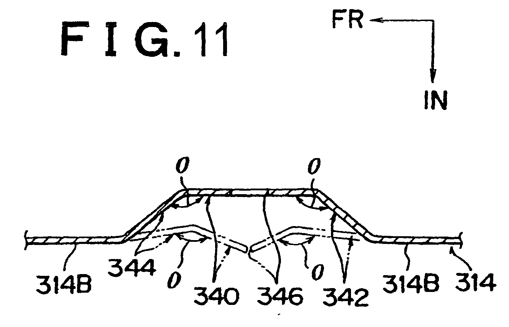

An elongated hole portion 346 that cuts through the bent portion P3 is formed extending in the vehicle vertical direction in the center portion in the vehicle longitudinal direction of the folding portion 340. This hole portion 346 is designed so as to be compressed in the manner shown by the double dot chain line in Figs. 9 and 11 when the folding portion 340 becomes folded.

As is shown in Fig. 9, the folding portion 342 is provided toward the vehicle rear on the mounting portion 314D and, when looked at in plan view, extends from the rear end of the folding portion 340 rearwards and inward in the vehicle transverse direction. Moreover, a bent portion P5 is formed protruding toward the inner forward side of the vehicle at the center portion in the vertical direction of the folding portion 342, and the cross section of the folding portion 342, as seen from the transverse direction of the vehicle, is formed in a V shape bent toward the front of the vehicle.

A folding portion 344 is provided toward the vehicle front on the mounting portion 314D and, when looked at in plan view, extends from the front end of the folding portion 340 forwards and inward in the vehicle transverse direction. Moreover, a bent portion P6 is formed protruding toward the inner rearward side of the vehicle at the center portion in the vertical direction of the folding portion 344, and the cross section of the folding portion 344, as seen from the transverse direction of the vehicle, is formed in a V shape bent toward the rear of the vehicle.

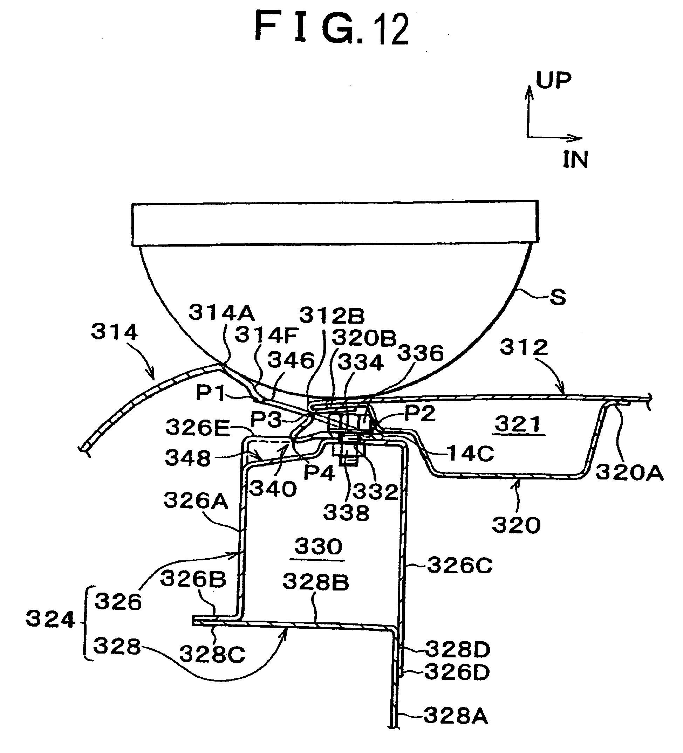

As seen in Fig. 10, a recessed portion 348 is formed in the area opposing the folding portions 340, 342, and 344 in the top wall portion 326E of the apron upper member upper 326. As is shown in Fig. 12, when the folding portion 340 becomes folded, a portion of the folding portion 340 enters the recessed portion 348.

The operation of the embodiment will now be described.

In this embodiment, as is shown in Fig. 9, the mounting portion 314D of the fender panel 314 is fixed to the top wall portion 326E of the apron upper member upper 326. Therefore, because the portion for mounting on the apron upper member upper 326 is not provided on a sloping wall portion as in the conventional structure, the engine room 371 is not made any smaller by protruding of the mounting portion 314D of the fender panel 314 toward the inner side in the vehicle transverse direction.

If, however, a colliding body S collides with the boundary 16 between the hood panel 12 and the fender 14 and the load acts substantially from an upward direction in substantially a downward direction (i.e. in the direction shown by the arrow A in Fig. 38), the area in the vicinity of the boundary 16 of the hood panel 12 and the area in the vicinity of the boundary 16 of the fender 14 is deformed downward, as is shown by the double dot chain line in Fig. 12.

At this time, in the vehicle fender structure of this embodiment, the folding portions 340, 342, and 344 of the fender panel 314 are folded by an impact load from a substantially upward direction, for example, as is shown in Fig. 12, with the top end P1 of the folding portion 340 rotating toward the vehicle outer side about the bottom end P2 and the folding portion 340 thereby being folded resulting in the deformation load being reduced. In addition, the hole portion 346 provided in the folding portion 340, which is on the outer side in the vehicle transverse direction of the mounting portion 314D, as is shown by the double dot chain line in Fig. 11, is deformed in the direction in which the angle θ of the angle portion of the hat shape increases, namely, in the direction in which the hole portion 346 contracts. Therefore, although it would be necessary for portions other than the angle portion to be deformed if the hole portion 346 was not formed and the deformation load would thus increase, because this can be eliminated using the hole portion 346, the deformation load is reduced. As a result, the ability to absorb impact is improved.

In this embodiment, if the lengths in the folding portion 340 between the various portions are set as: S1 between P1 and P2; S2 between P1 and P3; S3 between P3 and P4; and S4 between P4 and P2, then these lengths have the relationship: S1 ≒ S2 - S3 + S4. In the folding portion 340, the distance in a direct line between the top end P1 and the bottom end P2 after folding is set so as to be substantially the same as the distance in a straight line between the top end P1 and the bottom end P2 before folding. Therefore, when the folding portion 340 is folded, no new bent portion is created and the deformation load can be reliably reduced.
Moreover, after the folding, it is possible to prevent the bent portion P4 from protruding downward too much.

In this embodiment, as is shown in Fig. 12, when the folding portion 340 is folded, a portion (i.e. the bent portion P4) of the folding portion 340 enters the recessed portion 348. Accordingly, a portion of the folding portion 340 abuts against the apron upper member upper 326 and any further bending is prevented, therefore, the deformation load is further reduced.

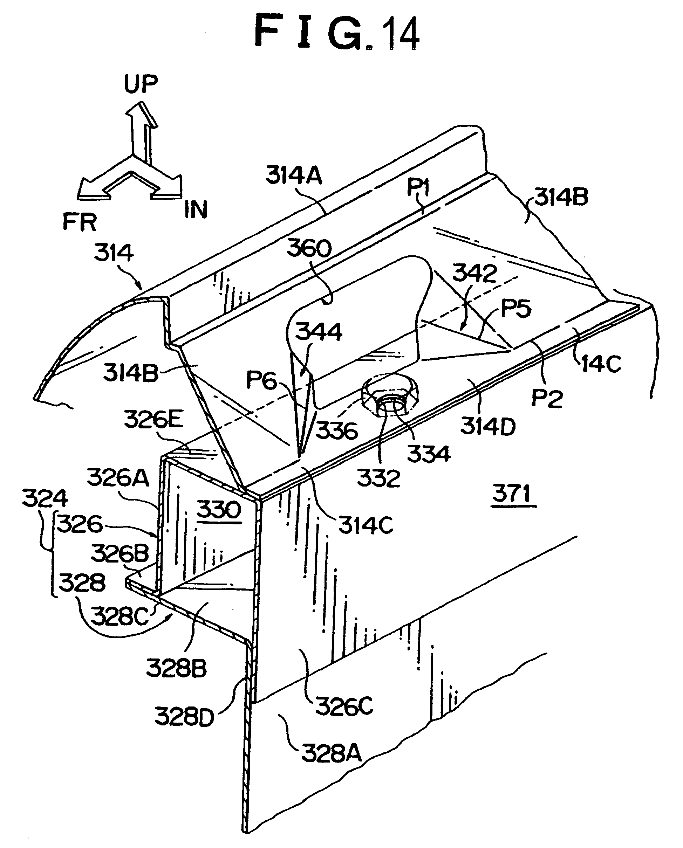

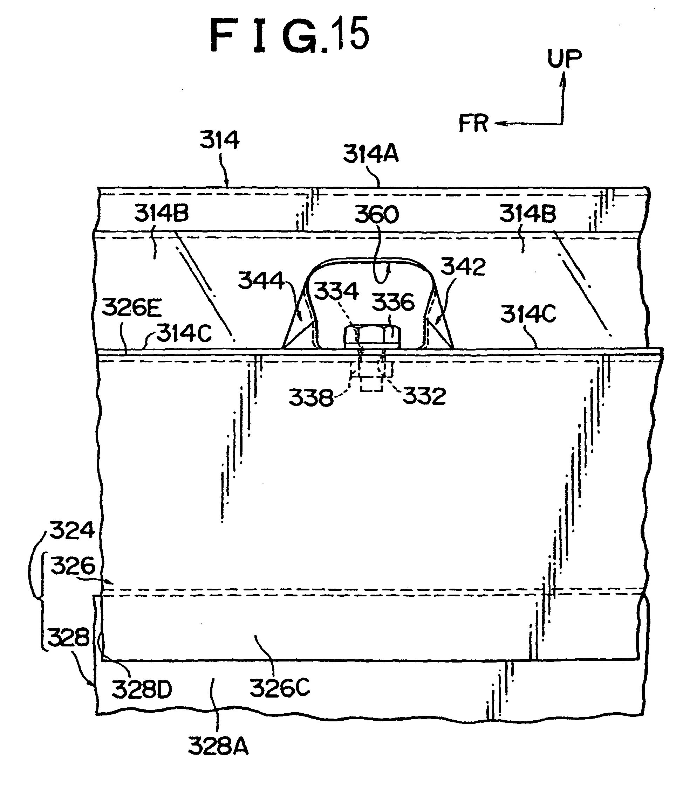

Next, a fourth embodiment of the vehicle fender structure of the invention will be described in accordance with Figs. 14 and 15.

Note that those members that are the same as in the third embodiment are given the same reference symbols and a description thereof is omitted.

In this embodiment, instead of the folding portion 340 of the twelfth embodiment, as is shown in Figs. 14 and 15, a large hole portion 360 is formed on the outer side in the vehicle transverse direction of the mounting portion 314D of the fender panel 314, and folding portions 342 and 344 are formed respectively in the vehicle rear side and vehicle front side of the hole portion 360, in the same way as in the third embodiment.

Next, the operation of this embodiment will be described.

In this embodiment, as is shown in Fig. 14, the mounting portion 314D of the fender panel 314 is fixed to the top wall portion 326E of the apron upper member upper 326. Therefore, because the portion for mounting on the apron upper member upper 326 is not provided on a sloping wall portion as in the conventional structure, the engine room 371 is not made any smaller by protruding of the mounting portion 314D of the fender panel 314 toward the inner side in the vehicle transverse direction.

In contrast, when the area in the vicinity of the inner edge portion 314A in the vehicle transverse direction of the fender panel 314 is deformed downward, the folding portions 342 and 344 of the fender panel 314 are folded by the impact load from a substantially upward direction and absorb the impact. The deformation load is also reduced by the hole portion 360 being contracted. Therefore, the ability to absorb impact is improved.

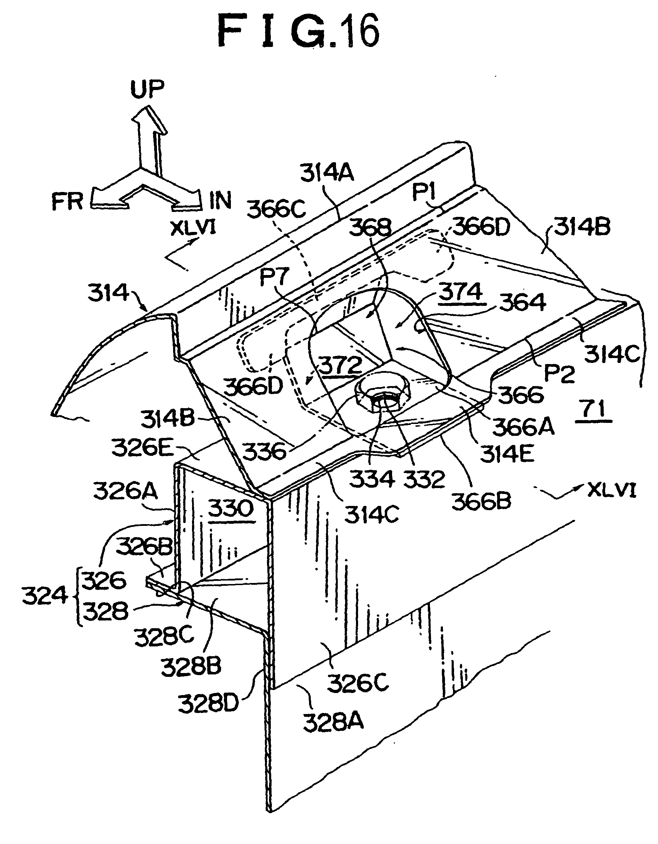

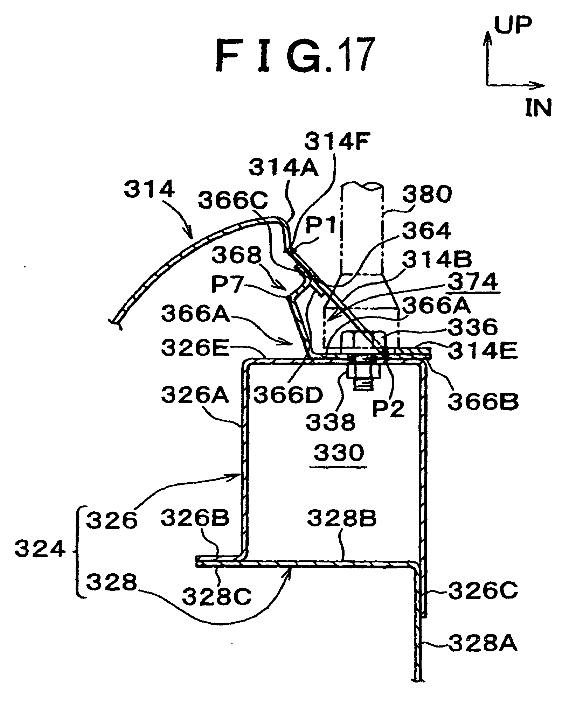

Next, a fifth embodiment of the vehicle fender structure of the invention will be described in accordance with Figs. 16 and 17.

Note that those members that are the same as in the third embodiment are given the same reference symbols and a description thereof is omitted.

In this embodiment, instead of the folding portions 340, 342, and 344 of the third embodiment, as is shown in Fig. 16, a large hole portion 364 is formed in the fender panel 314 and the mounting portion of the fender panel 314 is a mounting portion 366A of a bracket 366 which is a separate body. Namely, a mounting hole 332 for mounting on the apron upper member upper 326 is formed in the mounting portion 336A of the bracket 336, and the inner end portion 366B in the vehicle transverse direction of the mounting portion 366A is joined to the bottom surface of a joining portion 314E formed continuously with the flange 314C of the hood panel 314.

Moreover, a flange portion 366C is formed at the top end portion of the bracket 366 and the rear surface of the sloping wall portion 314B is joined to the flange portion 366C. Note that the flange portion 366C extends in the vehicle longitudinal direction and widened portions 366D are formed at both ends of the flange portion 366C in the vehicle longitudinal direction.

As is shown in Fig. 17, the size of the hole 364 is set such that a jig for fastening the bolt 336 can be inserted therein, and a folding portion 368 that is folded by a load from a substantially upward direction is formed between the mounting portion 366A of the bracket 366 and the flange portion 366C of the bracket 366. Namely, the folding portion 368 is provided at the outer side in the vehicle transverse direction of the mounting portion 366A, and a bent portion P7 that protrudes outward in the vehicle transverse direction is formed at the center portion in the vertical direction of the folding portion 368. The cross section of the folding portion 368 as seen from the vehicle longitudinal direction is formed as a V shape bent outward in the vehicle transverse direction. As a result, as is shown in Fig. 16, a hole portion 372 and a hole portion 374 are formed respectively at the vehicle front side and vehicle rear side of the folding portion 368.

The operation of this embodiment will now be described.

In this embodiment, as is shown in Fig. 16, the flange 314C of the fender panel 314 is fixed to the top wall portion 326E of the apron upper member upper 326. Therefore, because the portion for mounting on the apron upper member upper 326 is not provided on a sloping wall portion as in the conventional structure, the engine room 371 is not made any smaller by protruding of the mounting portion of the fender panel 314 toward the inner side in the vehicle transverse direction.

In contrast, when the area in the vicinity of the inner edge portion 314A in the vehicle transverse direction of the fender panel 314 is deformed downward, the folding portions 368 of the fender panel 314 is folded by the impact load from a substantially upward direction and absorbs the impact. The deformation load is also reduced by the hole portions 372 and 374 being contracted. Therefore, the ability to absorb impact is improved.

Moreover, in this embodiment, because the folding portion 368 and the mounting portion 366A are formed in the bracket 366 that is formed separately from the fender panel 314, it is possible to set the shape of the folding portion 368 without having to consider the formability of the fender panel 314. A result of this is that, for example, the degree of freedom in the design of the fender panel 314 is improved.

In the above, a detailed description has been given of specific embodiments of the invention, however, the invention is not limited to these embodiments and it will be evident to one skilled in the art that various other embodiments are possible within the scope of the invention. For example, the shape of the cross section of the folding portions 340, 342, 344, and 368 is not limited to a V and it is also possible to use a Z shape or the like.

In the above, a detailed description has been given of specific embodiments of the invention, however, the invention is not limited to these embodiments and it will be evident to one skilled in the art that various other embodiments are possible within the scope of the invention.

## Claims

1. Vehicle fender portion structure (14) comprising a fender mounted on a structural member (10) of a vehicle, wherein the fender portion structure (14) is provided with
a first deforming portion (66) in the fender (14) that is deformed by an impact load from a substantially upward direction (A), **characterized by**
a second deforming portion (54) in the structural member (10) that is deformed by an impact load from a substantially upward direction (A), wherein the second deforming portion (54) is connected to the first deforming portion (66) and the second deforming portion (54) is deformed together with the first deforming portion (66), and
a deformation suppressing means (62) that suppresses a deformation of the first deforming portion (66) and the second deforming portion (54) at a predetermined load or less.

2. The vehicle fender portion structure (14) according to claim 1, wherein
the first deforming portion (66) is a tongue shaped piece in the fender and
the second deforming portion (54) is a tongue shaped piece in the structural member.(10), and
the deformation suppressing means (62) is a supporting piece provided below the tongue shape piece (54) in the structural member (10).

3. The vehicle fender portion structure (14) according to claim 2, wherein the tongue shaped piece (54) in the structural member (10) is provided with a weakened portion (54B) that acts as a trigger for deformation.

4. Vehicle fender portion structure (14) comprising a fender mounted on a structural member (10) of a vehicle, wherein the fender portion structure (14) is provided
with a weakened portion (80) on an outside surface (14F) in the vehicle transverse direction of the fender (14) that becomes a base point of deformation caused by an impact load from a substantially upward direction (A), **characterized by** being provided
with a linking member (84) that links the vicinity of the weakened portion (80) with the structural member (10).

5. The vehicle fender portion structure (14) according to claim 4, wherein the weakened portion (80) is a concave groove extending in the longitudinal direction of the vehicle.

6. The vehicle fender portion structure (14) according to claim 5, wherein an ornamental molding (82) is attached to the concave groove.

7. Vehicle fender portion structure comprising a fender mounted on a structural member (324) of a vehicle, wherein the structure is provided with
a general surface between the structural member and a parting portion between a hood (312) that is formed as a sloping wall portion (314B) that slopes downward toward the inner side in the vehicle transverse direction,
a fender panel (314) whose attachment portion (314D) to the structural member (324) is substantially horizontal, and,
between the sloping wall portion (314B) and the mounting portion (314D), a folding portion (340, 342, 344)
**characterized in that**
the folding portion (340, 342, 344) is provided
with a bent portion (P3, P4, P5, P6) about which the folding portion (340, 342, 344) becomes folded by a load from a substantially upward direction (A), and
with a hole (346; 360; 364) that cuts through the bent portion (P3, P4, P5, P6) and that is contracted when the folding portion (340, 342, 344) is folded.

8. The vehicle fender portion structure according to claim 7, wherein
the folding portions (342, 344) are provided at least to the front and rear in the longitudinal direction of the vehicle of the mounting portion (314D), and
the hole portion (346) is provided at an outer side in the vehicle transverse direction of the mounting portion (314D).

9. The vehicle fender portion structure according to claim 8, wherein a straight line distance between a bottom end (P2) and a top end (P1) of the folding portion (340) before it is folded is substantially equal to a straight line distance between a bottom end (P2) and a top end (P1) of the folding portion (340) after it is folded.

10. The vehicle fender portion structure according to claim 8 or 9, wherein a recessed portion (364) is provided in an area opposite the folding portion (368) of the structural member.

11. The vehicle fender portion structure according to claim 10, wherein
the folding portion (368) is provided at an outer side in the vehicle transverse direction of the mounting portion (366A), and
the hole portions (372, 374) are provided to the front and rear in the longitudinal direction of the vehicle of the mounting portion (366A).

12. The vehicle fender portion structure according to claim 11, wherein the folding portion (368) is formed separately from the fender panel.

## Patentansprüche

1. Fahrzeugkotflügelabschnittsstruktur (14) mit einem an einem Strukturelement (10) eines Fahrzeugs montierten Kotflügel, wobei die Kotflügelabschnittsstruktur (14) versehen ist mit
einem ersten Verformungsabschnitt (66) in dem Kotflügel (14), der durch eine Aufpralllast im Wesentlichen von einer Aufwärtsrichtung (A) verformt wird, **gekennzeichnet durch**
einen zweiten Verformungsabschnitt (54) in dem Strukturelement (10), der **durch** eine Aufpralllast im Wesentlichen von einer Aufwärtsrichtung (A) verformt wird, wobei der zweite Verformungsabschnitt (54) an dem ersten Verformungsabschnitt (66) angeschlossen ist und der zweite Verformungsabschnitt (54) zusammen mit dem ersten Verformungsabschnitt (66) verformt wird, und
eine Verformungsunterdrückungseinrichtung (62), die eine Verformung des ersten Verformungsabschnitts (66) und des zweiten Verformungsabschnitts (54) bei einer vorbestimmten Last oder weniger unterdrückt.

2. Fahrzeugkotflügelabschnittsstruktur (14) gemäß Anspruch 1, wobei
der erste Verformungsabschnitt (66) ein zungenförmiges Teil in dem Kotflügel ist, und
der zweite Verformungsabschnitt (54) ein zungenförmiges Teil in dem Strukturelement (10) ist, und
die Verformungsunterdrückungseinrichtung (62) ein stützendes Teil ist, das unterhalb des zungenförmigen Teils (54) in dem Strukturelement (10) vorgesehen ist.

3. Fahrzeugkotflügelabschnittstruktur (14) gemäß Anspruch 2, wobei das zungenförmige Teil (54) in dem Strukturelement (10) mit einem geschwächten Abschnitt (54B) versehen ist, der als ein Auslöser für die Verformung wirkt.

4. Fahrzeugkotflügelabschnittsstruktur (14) mit einem an einem Strukturelement (10) eines Fahrzeugs montierten Kotflügel, wobei die Kotflügelabschnittsstruktur (14) versehen ist
mit einem geschwächten Abschnitt (80) an einer außenseitigen Fläche (14F) in der Fahrzeugquerrichtung des Kotflügels (14), der ein Basispunkt einer Verformung wird, die durch eine Aufpralllast im Wesentlichen von einer Aufwärtsrichtung (A) verursacht wird, **dadurch gekennzeichnet, dass** sie versehen ist mit
einem Verbindungselement (84), das die Umgebung des geschwächten Abschnitts (80) mit dem Strukturelement (10) verbindet.

5. Fahrzeugkotflügelabschnittsstruktur (14) gemäß Anspruch 4, wobei der geschwächte Abschnitt (80) eine konkave Nut ist, die sich in der Längsrichtung des Fahrzeugs erstreckt.

6. Fahrzeugkotflügelabschnittsstruktur (14) gemäß Anspruch 5, wobei an der konkaven Nut ein dekoratives Formstück (82) angebracht ist.

7. Fahrzeugkotflügelabschnittsstruktur mit einem an einem Strukturelement (324) eines Fahrzeugs montierten Kotflügel, wobei die Struktur versehen ist mit
einer allgemeinen Fläche zwischen dem Strukturelement und einem teilenden Abschnitt zwischen einer Kühlerhaube (312), der als ein geneigter Wandabschnitt (314B) ausgebildet ist, der sich in Richtung der Innenseite in der Fahrzeugquerrichtung abwärts neigt,
einem Kotflügelblech (314), dessen Anbringabschnitt (314D) an das Strukturelement (324) im Wesentlichen horizontal ist, und
einem Faltabschnitt (340, 342, 344) zwischen dem geneigten Wandabschnitt (314B) und dem Montageabschnitt (314D), **dadurch gekennzeichnet, dass**
der Faltabschnitt (340, 342, 344) versehen ist
mit einem gebogenen Abschnitt (P3, P4, P5, P6), um den der Faltabschnitt (340, 342, 344) durch eine Last im Wesentlichen von einer Aufwärtsrichtung (A) gefaltet wird, und
mit einem Loch (346; 360; 364), das durch den gebogenen Abschnitt (P3, P4, P5, P6) schneidet und das zusammengezogen wird, wenn der Faltabschnitt (340, 342, 344) gefaltet wird.

8. Fahrzeugkotflügelabschnittsstruktur gemäß Anspruch 7, wobei
die Faltabschnitte (342, 344) in der Längsrichtung des Fahrzeugs zumindest vorne und hinten des Montageabschnitts (314D) vorgesehen sind, und
der Lochabschnitt (346) in der Fahrzeugquerrichtung an einer äußeren Seite des Montageabschnitts (314D) vorgesehen ist.

9. Fahrzeugkotflügelabschnittsstruktur gemäß Anspruch 8, wobei ein geradliniger Abstand zwischen einem unteren Ende (P2) und einem oberen Ende (P1) des Faltabschnitts (340), bevor er gefaltet wird, im Wesentlichen gleich einem geradliniger Abstand zwischen einem unteren Ende (P2) und einem oberen Ende (P1) des Faltabschnitts (340) ist, nachdem er gefaltet ist.

10. Fahrzeugkotflügelabschnittsstruktur gemäß Anspruch 8 oder 9, wobei in einem dem Faltabschnitt (368) des Strukturelements entgegengesetzten Bereich ein vertiefter Abschnitt (364) vorgesehen ist.

11. Fahrzeugkotflügelabschnittsstruktur gemäß Anspruch 10, wobei
der Faltabschnitt (368) in der Fahrzeugzeugquerrichtung an einer äußeren Seite des Montageabschnitts (366A) vorgesehen ist, und
die Lochabschnitte (372, 374) in der Längsrichtung des Fahrzeugs vorne und hinten des Montageabschnitts (366A) vorgesehen sind.

12. Fahrzeugkotflügelabschnittsstruktur gemäß Anspruch 11, wobei der Faltabschnitt (368) getrennt von dem Kotflügelblech ausgebildet ist.

## Revendications

1. Structure de partie d'aile d'une voiture (14) comprenant une aile montée sur un élément de structure (10) d'un véhicule, dans laquelle la structure de la partie d'aile (14) est équipée de
une première partie se déformant (66) dans l'aile (14) qui est déformée par une charge de choc dans un sens essentiellement vers le bas (A), **caractérisée en ce que**
une deuxième partie se déformant (54) dans l'élément de structure (10) qui est déformée par une charge de choc dans un sens essentiellement vers le bas (A), dans laquelle la deuxième partie se déformant (54) est connectée à la première partie se déformant (66) et la deuxième partie se déformant (54) est déformée avec la première partie se déformant (66), et
un moyen de suppression de déformation (62) qui supprime une déformation de la première partie se déformant (66) et de la deuxième partie se déformant (54) pour une charge prédéterminée ou moins.

2. Structure de partie d'aile de véhicule (14) selon la revendication 1, dans laquelle
la première partie se déformant (66) est une pièce en forme de languette dans l'aile et
la deuxième partie se déformant (54) est une pièce en forme de languette dans l'élément de structure (10), et
le moyen de suppression de déformation (62) est une pièce de soutien installée sous la pièce en forme de languette (54) dans l'élément de structure (10).

3. Structure de partie d'aile de véhicule (14) selon la revendication 2, dans laquelle la pièce en forme de languette (54) dans l'élément de structure (10) est équipée d'une partie affaiblie (54B) qui sert de déclencheur pour la déformation.

4. Structure de partie d'aile d'une voiture (14) comprenant une aile montée sur un élément de structure (10) d'un véhicule, dans lequel la structure de la partie d'aile (14) est équipée
d'une partie affaiblie (80) sur une surface extérieure (14F), dans la direction transversale du véhicule, de l'aile (14) qui devient un point de base de déformation causé par une charge de choc dans un sens essentiellement vers le bas (A), **caractérisée en ce que** qu'elle est équipée
d'un élément de liaison (84) qui relie le voisinage de la partie affaiblie (80) à l'élément de structure (10).

5. Structure de partie d'aile de véhicule (14) selon la revendication 4, dans laquelle la partie affaiblie (80) est une gorge concave s'étendant dans la direction longitudinale du véhicule.

6. Structure de partie d'aile de véhicule (14) selon la revendication 5, dans laquelle une moulure décorative (82) est attachée à la gorge concave.

7. Structure de partie d'aile d'une voiture comprenant une aile montée sur un élément de structure (324) d'un véhicule, dans laquelle la structure est équipée de
une surface générale entre l'élément de structure et une partie de séparation entre un capot (312) qui est formée comme une partie de paroi en pente (314B) qui descend vers le bas vers le côté intérieur dans la direction transversale du véhicule,
un panneau d'aile (314) dont la partie d'attache (314D) à l'élément de structure (324) est essentiellement horizontale, et
entre la partie de paroi en pente (314B) et la partie de montage (314D), une partie se pliant (340, 342, 344),
**caractérisée en ce que**
une partie se pliant (340, 342, 344) est équipée
d'une partie courbée (P3, P4, P5, P6) autour de laquelle la partie se pliant (340, 342, 344) est pliée par une charge dans un sens essentiellement vers le bas (A), et
d'un trou (346; 360; 364) qui traverse la partie courbée (P3, P4, P5, P6) et qui est contracté quand la partie se pliant (340, 342, 344) est pliée.

8. Structure de partie d'aile de véhicule selon la revendication 7, dans laquelle
les parties se pliant (342, 344) sont installées au moins à l'avant et à l'arrière, dans la direction longitudinale du véhicule, de la partie de montage (314D), et
la partie de trou (346) est prévue au niveau d'un côté extérieur, dans la direction transversale du véhicule, de la partie de montage (314D).

9. Structure de partie d'aile de véhicule selon la revendication 8, dans laquelle une distance d'une ligne droite entre une extrémité inférieure (P2) et une extrémité supérieure (P1) de la partie se pliant (340) avant qu'elle soit pliée est quasiment égale à une distance d'une ligne droite entre une extrémité inférieure (P2) et une extrémité supérieure (P1) de la partie se pliant (340) après qu'elle soit pliée.

10. Structure de partie d'aile de véhicule selon la revendication 8 ou 9, dans laquelle une partie enfoncée (364) est prévue dans une région opposée à la partie se pliant (368) de l'élément de structure.

11. Structure de partie d'aile de véhicule selon la revendication 10, dans laquelle
la partie se pliant (368) est prévue au niveau d'un côté extérieur, dans la direction transversale du véhicule, de la partie de montage (366A), et
les parties de trou (372, 374) sont installées à l'avant et à l'arrière, dans la direction longitudinale du véhicule, de la partie de montage (366A).

12. Structure de partie d'aile de véhicule selon la revendication 11, dans laquelle la partie se pliant (368) est formée séparée du panneau d'aile.
